# EUROPÄISCHE PATENTANMELDUNG

(11) **EP 3 248 671 A2**
(43) Veröffentlichungstag der Anmeldung: **29.11.2017**
(21) Anmeldenummer: 17164508.8
(22) Anmeldetag: 03.04.2017
(51) Int. Cl.: B01D 53/02, B01J 20/22, B01D 53/04

(54) **VERFAHREN ZUR ENTFERNUNG VON SILIKONEN UND FLÜCHTIGEN ORGANISCHEN VERBINDUNGEN, INSBESONDERE ÖLDÄMPFEN AUS GASEN**

(30) Priorität: 06.05.2016 DE 102016108432
(71) Anmelder: Parker Hannifin Manufacturing Germany GmbH & Co. KG, 45219 Essen (DE)
(72) Erfinder: WONNEBERGER, Matthias, 59425 Unna (DE); TIMMLER, Jürgen, 42697 Solingen (DE)
(74) Vertreter: Cohausz & Florack

(57) **Zusammenfassung**

Dargestellt und beschrieben ist ein Verfahren zur Entfernung von Silikonen aus Gasen für eine Lackiereinrichtung, umfassend die folgenden Schritte: a) Bereitstellen einer Lackiereinrichtung (13), b) Bereitstellen einer Druckgaseinrichtung (10), c) Bereitstellen eines Filters (2) mit einem Filtermedium (9), und d) Filtern des Druckgases durch das Filtermedium (9). Um eine besonders effektive Reinigung des Gases zu erreichen, wird vorgeschlagen, dass das Filtermedium (9) ein Styrol-Divinylbenzolbasiertes Ionenaustauschharz enthält.

## Beschreibung

Die Erfindung betrifft ein Verfahren zur Entfernung von Silikonen aus Gasen für eine Lackiereinrichtung, umfassend die folgenden Schritte: a) Bereitstellen einer Lackiereinrichtung, b) Bereitstellen einer Druckgaseinrichtung, c) Bereitstellen eines Filters mit einem Filtermedium, und d) Filtern des Druckgases durch das Filtermedium.

Die Erfindung betrifft zudem ein Verfahren zur Entfernung von flüchtigen organischen Verbindungen, insbesondere Öldämpfen aus Gasen für eine Atemluftregelung für Taucher, umfassend die folgenden Schritte: a) Bereitstellen eines Atemreglers für Taucher, b) Bereitstellen einer Druckgaseinrichtung, c) Bereitstellen eines Filters mit einem Filtermedium, und d) Filtern des Druckgases durch das Filtermedium.

Für viele Anwendungen werden qualitativ hochwertige, saubere Gase benötigt. Beispielhafte Anwendungsgebiete sind die Nahrungsmittelindustrie und die pharmazeutische Industrie. Bei diesen Anwendungen müssen die Gase möglichst frei von Staub, Feuchtigkeit oder Ölen sein. Bei der Erzeugung von Druckluft stellt die Entfernung von Ölen eine besondere Herausforderung dar, weil einerseits zur Verdichtung der Luft häufig Kompressoren eingesetzt werden, die Öl als Schmiermittel enthalten und geringe Mengen an die zu verdichtende Luft abgeben und weil andererseits die von den Kompressoren angesaugte Luft bereits geringe Mengen an öligen Verunreinigungen enthalten kann, die durch die Kompression konzentriert werden.

Zur Lösung dieses Problems wurde bereits der Einsatz von ölfrei arbeitenden Kompressoren vorgeschlagen. Dies sind Kompressoren, die entweder gar kein Öl enthalten ("Trockenläufer") oder bei denen die zu verdichtende Luft nicht mit Öl in Berührung kommt. Hierzu müssen spezielle, meist sehr teure Öle und/oder besondere Lager - beispielsweise fettgefüllte, gekapselte Lager - eingesetzt werden.

In einigen Fällen können jedoch keine ölfreien Kompressoren eingesetzt werden, beispielsweise aus Kostengründen. In diesen Fällen muss das Öl nachträglich aus dem verdichteten Gas entfernt werden. Hierzu ist der Einsatz unterschiedlicher Filter bekannt.

Aus der EP 2 244 806 B1 ist beispielsweise ein Verfahren zur Reinigung von Gasen bekannt, die einem Verbrennungsmotor oder einer Gasturbine zugeführt werden. Insbesondere handelt es sich um Motoren bzw. Turbinen, die Biogas, insbesondere Methan verbrennen. Der dort verwendete Filter enthält ein Styrol-Divinylbenzol-basiertes Ionenaustauschharz. Nachteilig an dem beschriebenen Verfahren ist seine Beschränkung auf die Reinigung von Verbrennungsgasen.

Vor diesem Hintergrund liegt der Erfindung die Aufgabe zugrunde, das eingangs beschriebene und zuvor näher erläuterte Verfahren derart auszugestalten, dass eine besonders gründliche Reinigung von Gasen, insbesondere eine besonders gründliche Entfernung von Silikonen aus Gasen auch bei anderen Anwendungen ermöglicht wird.

Diese Aufgabe wird bei einem Verfahren nach dem Oberbegriff von Patentanspruch 1 sowie bei einem Verfahren nach dem Oberbegriff von Patentanspruch 2 dadurch gelöst, dass das Filtermedium ein Styrol-Divinylbenzol-basiertes Ionenaustauschharz enthält. Vorzugsweise wird das Filtermedium in Form von Granulat oder Pulver verwendet. Das Filtermedium kann ein polymerisches Adsorptionsmittel ("polymer adsorbent") sein und adsorbiert vorzugsweise flüchtige organische Verbindungen ("VOC" = "volatile organic compound"). Beispielsweise kann das Filtermedium Dowex Optipore V503 von Dow Chemical (Abs. [0036] der EP 2 244 806 B1), Amberlite XAD4 von Rohm & Haas (Abs. [0038] der EP 2 244 806 B1), Amberlite XAD7HP von Rohm & Haas (Abs. [0046] der EP 2 244 806 B1) oder Mischungen daraus enthalten.

Ein erstes erfindungsgemäßes Verfahren betrifft die Entfernung von Silikonen aus Gasen für eine Lackiereinrichtung und umfasst die folgenden Schritte: a) Bereitstellen einer Lackiereinrichtung, b) Bereitstellen einer Druckgaseinrichtung, c) Bereitstellen eines Filters mit einem Filtermedium, und d) Filtern des Druckgases durch das Filtermedium.

Ein zweites erfindungsgemäßes Verfahren betrifft die Entfernung von flüchtigen organischen Verbindungen, insbesondere Öldämpfen aus Gasen für eine Atemluftregelung für Taucher und umfasst die folgenden Schritte: a) Bereitstellen eines Atemreglers für Taucher, b) Bereitstellen einer Druckgaseinrichtung, c) Bereitstellen eines Filters mit einem Filtermedium, und d) Filtern des Druckgases durch das Filtermedium.

Beide Verfahren dienen demnach dem Zweck, Gase zu reinigen und insbesondere Silikone bzw. flüchtige organische Verbindungen, insbesondere Öldämpfe aus Gasen zu entfernen. Bei dem zu reinigenden Gas kann es sich beispielsweise um Luft bzw. Druckluft handeln. In beiden Verfahren wird ein Filtermedium genutzt, welches ein Styrol-Divinylbenzol-basiertes Ionenaustauschharz enthält. Ein derartiges Filtermedium ist - als solches - bereits aus der EP 2 244 806 B1 bekannt. Dort wird jedoch lediglich die Reinigung von Gasen beschrieben, die einem Verbrennungsmotor oder einer Gasturbine als Verbrennungsgas zugeführt werden - beispielsweise Biogas, insbesondere Methan. In dem dort beschriebenen Zusammenhang soll die Reinigung der Verbrennungsgase dem Zweck dienen, die Wartungs- bzw. Reinigungsintervalle des Verbrennungsmotors bzw. der Gasturbine zu verlängern.

Überraschend hat sich gezeigt, dass das aus der EP 2 244 806 B1 bekannte Filtermedium auch bei anderen Anwendungen mit Gasen sehr gute Ergebnisse liefert. Insbesondere wurde erkannt, dass das Filtermedium besonders geeignet ist für eine Verwendung zur Entfernung von Silikonen aus Gasen für eine Lackiereinrichtung sowie für eine Verwendung zur Entfernung von flüchtigen organischen Verbindungen, insbesondere Öldämpfen aus Gasen für eine Atemluftregelung für Taucher.

Die besondere Eignung für Lackieranlagen ergibt sich daraus, dass für qualitativ gute Lackierergebnisse eine gute Lackbenetzung sichergestellt werden muss. Insbesondere in der Automobilindustrie werden höchste Anforderungen an die Oberflächenqualität lackierter Flächen gestellt. Die Lackbenetzung kann jedoch durch Öle, Öldämpfe oder Partikel negativ beeinflusst werden (sog. lackbenetzungsstörende Substanzen). Als besonders nachteilig haben sich Silikone herausgestellt. Vor diesem Hintergrund muss die Druckluft, mit denen die Lackierpistolen versorgt werden, möglichst frei von diesen Verunreinigungen sein. Versuche haben ergeben, dass Filtermedien mit einem Styrol-Divinylbenzol-basierten Ionenaustauschharz diese Anforderungen besonders gut erfüllen. Dies liegt vor allem an den Silikon-adsorbierenden Eigenschaften dieses Filtermediums, die Silikone lagern sich also an der Oberfläche des Filtermediums ab.

Die besondere Eignung für Atemluftregelungen für Taucher ergibt sich daraus, dass die zu reinigenden Gase von dem Taucher eingeatmet werden, weshalb besonders hohe Anforderungen an die Reinheit gestellt werden. Gleichwohl werden die im Tauchsport verwendeten Druckluftflaschen teilweise mit einfachen - meist nicht ölfreien - Kompressoren befüllt, da nicht jede Tauchstation aufwändige ölfreie Kompressoren betreiben kann. Vor diesem Hintergrund hat es sich als vorteilhaft erwiesen, die aus den Druckluftflaschen strömende Luft zu filtern, bevor der Taucher sie einatmet. Versuche haben ergeben, dass Filtermedien mit einem Styrol-Divinylbenzol-basierten Ionenaustauschharz diese Anforderungen besonders gut erfüllen. Dies liegt vor allem an den VOC- und Öldampf-adsorbierenden Eigenschaften dieses Filtermediums, die flüchtigen organischen Verbindungen, insbesondere die Öldämpfe lagern sich also an der Oberfläche des Filtermediums ab. Zudem nimmt dieses Filtermedium - anders als beispielsweise die beim Tauchen häufig verwendete Aktivkohle - kein Wasser auf. Dies hat den Vorteil, dass die Atemluft das gewünschte Maß an Feuchtigkeit behält.

Nach einer Ausgestaltung beider Verfahren ist vorgesehen, dass als Gas Luft, insbesondere Druckluft eingesetzt wird. Bei Lackierarbeiten hat der Einsatz von Druckluft den Vorteil der guten Verfügbarkeit sowie der geringen Kosten. Im Tauchsport hat Druckluft den Vorteil, als Atemgas eingesetzt werden zu können. Es kann ausschließlich Druckluft eingesetzt werden oder ein Gemisch aus Druckluft und anderen Gasen, beispielsweise Sauerstoff, Stickstoff, Helium.

Gemäß einer Weiterbildung beider Verfahren weist der Filter ein Gehäuse mit einem Einlass, einem Auslass und mit einem luftdurchlässigen Einsatz zur Aufnahme des Filtermediums auf. Die Gestaltung des Filters mit separatem Einlass und Auslass hat den Vorteil, dass der Filter von dem zu reinigenden Gas durchströmt werden kann, ohne dass eine Vermischung von ungefiltertem und bereits gefiltertem Gas auftritt. Der Einsatz dient dem Zweck, das Filtermedium in dem Gehäuse präzise anzuordnen und einfach austauschen zu können.

Eine weitere Ausgestaltung beider Verfahren sieht vor, dass das Filtermedium mehrere unterschiedliche Ionenaustauschharze enthält. Die Mischung unterschiedlicher Ionenaustauschharze erlaubt die Anpassung des Filtermediums an bestimmte Verunreinigungen. Insbesondere können durch eine Mischung unterschiedlicher Ionenaustauschharze eine Vielzahl unterschiedlicher Silikone und flüchtiger organischer Verbindungen, insbesondere Öldämpfe wirksam aus dem zu reinigenden Gas entfernt werden.

Gemäß einer weiteren Ausbildung beider Verfahren ist vorgesehen, dass die Porengröße des Ionenaustauschharzes im Bereich zwischen 20 nm und 150 nm, insbesondere zwischen 50 nm und 100 nm liegt. Mit Porengrößen in den angegebenen Bereichen wurde eine besonders gründliche Filterung des Gases erreicht.

Die beiden zuvor beschriebenen Verfahren können in vorteilhafter Weise ergänzt werden durch den folgenden Schritt: e) Regeneration des Filtermediums. Die Regeneration des Filtermediums dient dem Zweck, die Adsorptionsfähigkeit des Filtermediums durch Desorption wiederherzustellen bzw. zu erhöhen. Während der Regeneration kann das Filtermedium in dem Filter verbleiben (z.B. um dort von einem Regenerationsgas durchströmt zu werden); die Regeneration des Filtermediums kann jedoch auch außerhalb des Filters erfolgen (durch Entnahme und Austausch des Filtermediums).

Eine weitere Ausgestaltung der beiden Verfahren sieht vor, dass der Gasdruck am Einlass und/oder am Auslass des Filters im Bereich zwischen 1 bar und 500 bar, insbesondere zwischen 5 bar und 16 bar liegt. Durch die Anpassung der Drücke, mit denen das Gas den Filter durchströmt, kann die Filterwirkung optimiert werden. Mit Drücken in den angegebenen Bereichen wurden besonders gute Ergebnisse erzielt. Zwischen Einlass und Auslass des Filters kann es zu einem geringfügigen Druckabfall kommen, so dass unterschiedliche Drücke anliegen.

Nach einer weiteren Ausbildung des Verfahrens wird schließlich vorgeschlagen, dass der Filter mit einem Volumenstrom im Bereich zwischen 0,1 l/min und 1000 l/min, insbesondere zwischen 1 l/min und 10 l/min durchströmt wird. Ein Volumenstrom in dem angegebenen Bereich hat sich als guter Kompromiss zwischen einer hohen Filterleistung (großer Volumenstrom) und einer gründlichen Filterwirkung (geringer Volumenstrom) erwiesen.

Die Erfindung wird nachfolgend anhand einer lediglich ein bevorzugtes Ausführungsbeispiel darstellenden Zeichnung näher erläutert. In der Zeichnung zeigen:
- Fig. 1:: eine Vorrichtung zur Ausführung einer ersten Ausgestaltung des erfindungsgemäßen Verfahrens, und
- Fig. 2:: eine Vorrichtung zur Ausführung einer zweiten Ausgestaltung des erfindungsgemäßen Verfahrens.

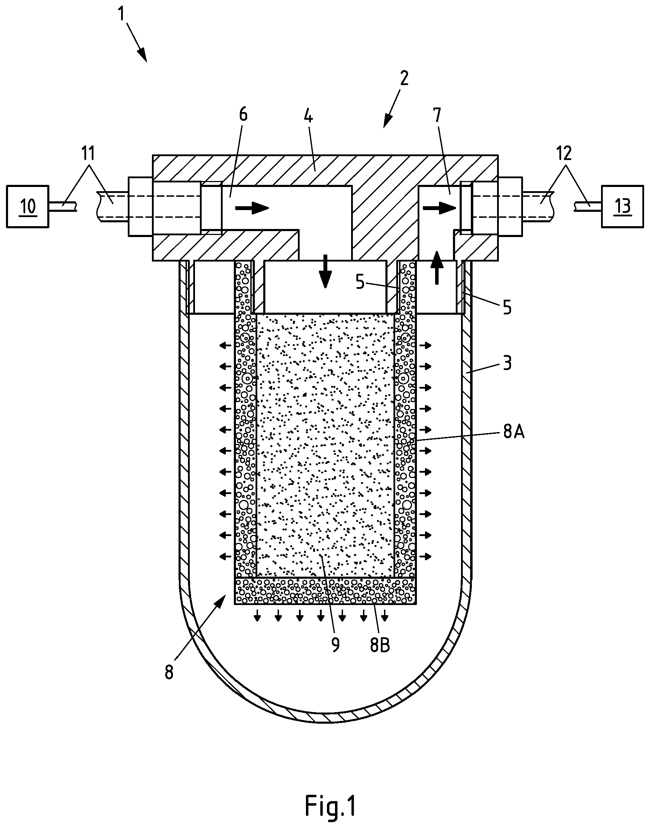

Fig. 1 zeigt eine Vorrichtung 1 zur Ausführung einer ersten Ausgestaltung des erfindungsgemäßen Verfahrens. Bei der Vorrichtung 1 handelt es sich um eine Lackieranlage 1 mit einem Filter 2 zur Entfernung von Silikonen aus Gasen für eine Lackiereinrichtung. Der Filter 2 umfasst ein Gehäuse 3, das mit einem Deckel 4 verbunden ist. Der Deckel 4 kann beispielsweise über eine Verschraubung 5 lösbar mit dem Gehäuse 3 verbunden sein. Der Deckel 4 weist einen Einlass 6 sowie einen Auslass 7 auf. Der Filter 2 weist zudem einen Einsatz 8 auf. Der Einsatz 8 ist an dem Deckel 4 befestigt und ragt von dem Deckel 4 nach unten in das Gehäuse 3 hinein. Auch die Verbindung zwischen dem Einsatz 8 und dem Deckel 4 kann über eine Verschraubung 5 realisiert werden. Der Einsatz 8 dient der Aufnahme eines Filtermediums 9. Der Einsatz 8 weist eine zylindrische Form auf und ist wenigstens abschnittsweise - beispielsweise im Bereich seiner Mantelfläche 8A und/oder im Bereich seiner Stirnfläche 8B - gasdurchlässig gestaltet. Beispielsweise kann der Einsatz 8 siebförmig gestaltet sein. Vorzugsweise enthält das Filtermedium 9 ein Styrol-Divinylbenzol-basiertes Ionenaustauschharz.

Die in Fig. 1 gezeigte Vorrichtung 1 kann in folgender Weise für die Durchführung der ersten Ausgestaltung des erfindungsgemäßen Verfahrens eingesetzt werden: Zunächst wird aus einer Druckgaseinrichtung 10 komprimierte Luft über eine Leitung 11 in den Einlass 6 des Filters 2 geleitet. Bei der Druckgaseinrichtung 10 kann es sich um eine Vorrichtung zur Erzeugung und/oder Speicherung von Druckluft handeln, beispielsweise um einen Kompressor und/oder um einen Drucktank. Die Luft strömt durch den Einlass 6 des Deckels 4 in den Einsatz 8 und tritt dort mit dem Filtermedium 9 in Kontakt, welches die Luft reinigt. Sodann strömt die Luft weiter durch die siebförmige Mantelfläche 8A sowie durch die siebförmige Stirnfläche 8B des Einsatzes 8 in Richtung des Auslasses 7 des Filters 2. Von dort strömt die gefilterte Luft über eine Leitung 12 weiter zu einer Lackiereinrichtung 13, wo sie für die Lackierung von Oberflächen genutzt wird. Der Filter 2 ist also in Strömungsrichtung des Gases zwischen der Druckgaseinrichtung 10 und der Lackiereinrichtung 13 angeordnet.

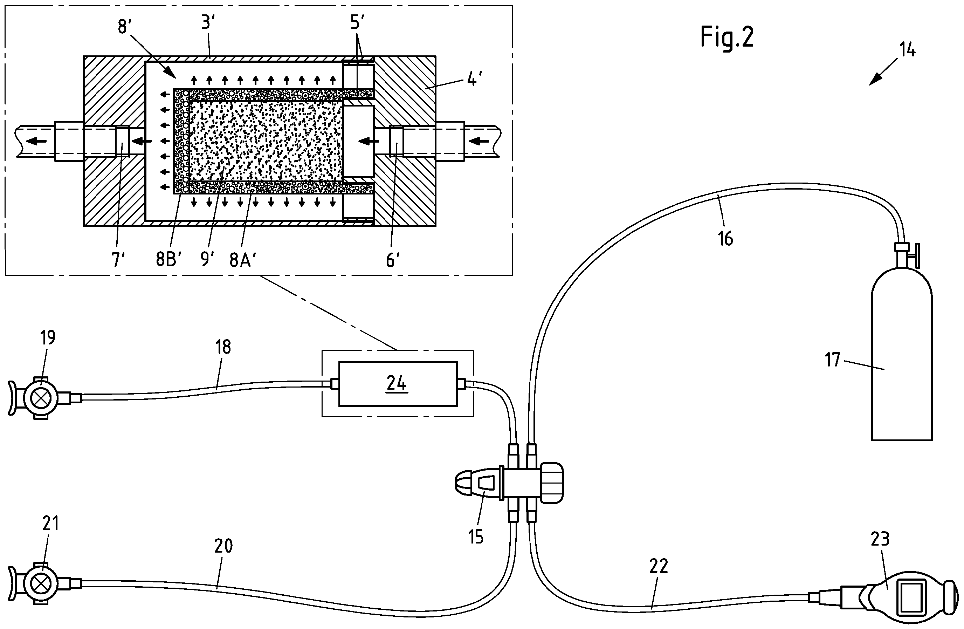

In Fig. 2 ist eine Vorrichtung 14 zur Ausführung einer zweiten Ausgestaltung des erfindungsgemäßen Verfahrens dargestellt. Bei der Vorrichtung 14 handelt es sich um eine Vorrichtung zur Entfernung von flüchtigen organischen Verbindungen, insbesondere Öldämpfen aus Gasen für eine Atemluftregelung für Taucher. Die Vorrichtung 14 umfasst einen Atemregler 15 (Druckminderer), der über eine Leitung 16 mit einer Druckluftflasche 17 verbindbar ist. Der Atemregler 15 ist zudem über eine Leitung 18 mit einer ersten Luftversorgung 19 verbunden und ebenso über eine Leitung 20 mit einer zweiten Luftversorgung 21 verbunden. Die erste Luftversorgung 19 versorgt den Taucher mit Atemluft, die zweite Luftversorgung 21 dient für Notfälle. Der Atemregler 15 ist zudem über eine Leitung 22 mit einer Anzeige 23 verbunden, die beispielsweise Informationen über den Druck in der Druckluftflasche 17 oder andere Informationen (z.B. Kompass) anzeigt.

Die in Fig. 2 dargestellte Vorrichtung 14 umfasst zudem einen Filter 24, der in Strömungsrichtung des Gases zwischen dem Atemregler 15 und der ersten Luftversorgung 19 angeordnet ist. Zusätzlich kann ein weiterer (in Fig. 2 nicht dargestellter) Filter vorgesehen sein, der zwischen dem Atemregler 15 und der zweiten Luftversorgung 21 angeordnet ist. Der Filter 24 wird aus Gründen der besseren Übersicht in vergrößerter Ansicht dargestellt. Da der Filter 24 große Ähnlichkeiten mit dem Filter 2 aus Fig. 1 aufweist, werden entsprechende Bezugszeichen verwendet. Auch der Filter 24 umfasst ein Gehäuse 3', das mit einem Deckel 4' verbunden ist. Der Deckel 4' kann beispielsweise über eine Verschraubung 5' lösbar mit dem Gehäuse 3' verbunden sein. Der Deckel 4' weist einen Einlass 6' sowie einen Auslass 7' auf. Der Filter 24 weist zudem einen Einsatz 8' auf. Der Einsatz 8' ist an dem Deckel 4' befestigt und ragt von dem Deckel 4' in das Gehäuse 3' hinein. Auch die Verbindung zwischen dem Einsatz 8' und dem Deckel 4' kann über eine Verschraubung 5' realisiert werden. Der Einsatz 8' dient der Aufnahme eines Filtermediums 9'. Der Einsatz 8' weist eine zylindrische Form auf und ist wenigstens abschnittsweise - beispielsweise im Bereich seiner Mantelfläche 8A' und/oder im Bereich seiner Stirnfläche 8B' - gasdurchlässig gestaltet. Beispielsweise kann der Einsatz 8' siebförmig gestaltet sein. Vorzugsweise enthält das Filtermedium 9' ein Styrol-Divinylbenzol-basiertes Ionenaustauschharz.

### Bezugszeichenliste:

- 1:: Vorrichtung / Lackieranlage
- 2:: Filter
- 3, 3':: Gehäuse
- 4, 4':: Deckel
- 5, 5':: Gewinde
- 6, 6':: Einlass
- 7,7':: Auslass
- 8, 8':: Einsatz
- 8A, 8A':: Mantelfläche (des Einsatzes 8, 8')
- 8B, 8B':: Stirnfläche (des Einsatzes 8, 8')
- 9, 9':: Filtermedium
- 10:: Druckgaseinrichtung
- 11:: Leitung
- 12:: Leitung
- 13:: Lackiereinrichtung
- 14:: Vorrichtung
- 15:: Atemregler
- 16:: Leitung
- 17:: Druckluftflasche
- 18:: Leitung
- 19:: erste Luftversorgung
- 20:: Leitung
- 21:: zweite Luftversorgung
- 22:: Leitung
- 23:: Anzeige
- 24:: Filter

## Patentansprüche

1. Verfahren zur Entfernung von Silikonen aus Gasen für eine Lackiereinrichtung, umfassend die folgenden Schritte:
a) Bereitstellen einer Lackiereinrichtung (13),
b) Bereitstellen einer Druckgaseinrichtung (10),
c) Bereitstellen eines Filters (2) mit einem Filtermedium (9), und
d) Filtern des Druckgases durch das Filtermedium (9),
**dadurch gekennzeichnet, dass**
das Filtermedium (9) ein Styrol-Divinylbenzol-basiertes Ionenaustauschharz enthält.

2. Verfahren zur Entfernung von flüchtigen organischen Verbindungen, insbesondere Öldämpfen aus Gasen für eine Atemluftregelung für Taucher, umfassend die folgenden Schritte:
a) Bereitstellen eines Atemreglers (15) für Taucher,
b) Bereitstellen einer Druckgaseinrichtung (16),
c) Bereitstellen eines Filters (24) mit einem Filtermedium (9'), und
d) Filtern des Druckgases durch das Filtermedium (9'),
**dadurch gekennzeichnet, dass**
das Filtermedium (9') ein Styrol-Divinylbenzol-basiertes Ionenaustauschharz enthält.

3. Verfahren nach Anspruch 1 oder Anspruch 2,
**dadurch gekennzeichnet, dass**
als Gas Luft, insbesondere Druckluft eingesetzt wird.

4. Verfahren nach einem der Ansprüche 1 bis 3,
**dadurch gekennzeichnet, dass**
der Filter (2, 24) ein Gehäuse (3, 3') mit einem Einlass (6, 6'), einem Auslass (7, 7') und mit einem luftdurchlässigen Einsatz (8, 8') zur Aufnahme des Filtermediums (9, 9') aufweist.

5. Verfahren nach einem der Ansprüche 1 bis 4,
**dadurch gekennzeichnet, dass**
das Filtermedium (9, 9') mehrere unterschiedliche Ionenaustauschharze enthält.

6. Verfahren nach einem der Ansprüche 1 bis 5,
**dadurch gekennzeichnet, dass**
die Porengröße des Ionenaustauschharzes im Bereich zwischen 20 nm und 150 nm, insbesondere zwischen 50 nm und 100 nm liegt.

7. Verfahren nach einem der Ansprüche 1 bis 6,
**gekennzeichnet durch**
den folgenden Schritt: e) Regeneration des Filtermediums (9, 9').

8. Verfahren nach einem der Ansprüche 1 bis 7,
**dadurch gekennzeichnet, dass**
der Gasdruck am Einlass (6, 6') und/oder am Auslass (7, 7') des Filters (2, 24) im Bereich zwischen 1 bar und 500 bar, insbesondere zwischen 5 bar und 16 bar liegt.

9. Verfahren nach einem der Ansprüche 1 bis 8,
**dadurch gekennzeichnet, dass**
der Filter (2, 24) mit einem Volumenstrom im Bereich zwischen 0,1 l/min und 1000 l/min, insbesondere zwischen 1 l/min und 10 l/min durchströmt wird.
